# EUROPEAN PATENT APPLICATION

(11) **EP 4 488 916 A1**
(43) Date of publication of application: **08.01.2025**
(21) Application number: 24186627.6
(22) Date of filing: 04.07.2024
(51) Int. Cl.: G06Q 30/0201, G06Q 30/0203, G06Q 30/0204

(54) **SYSTEM AND METHOD FOR MAPPING REGIONAL SOCIAL ENTREPRENEURSHIP ECOSYSTEMS**

(30) Priority: 05.07.2023 US 202363511915 P
(71) Applicant: Csaky, Eva, Dallas Texas 75225 (US); Olivier, James, Dallas Texas 75205 (US)
(72) Inventor: Csaky, Eva, Dallas Texas 75225 (US); Olivier, James, Dallas Texas 75205 (US)
(74) Representative: Patent 42

(57) **Abstract**

A method of providing information for social entrepreneurship ecosystems within a geographic region, including gathering social entrepreneurship data, aggregating the social entrepreneurship data into related groups, merging and storing the related groups into a related groups database, organizing the related groups of social entrepreneurship data into relevant categories, storing the relevant categories into a relevant groups database, and transmitting the relevant categories for display within a web browser on a user device.

## Description

### Related Applications

This application claims priority under 35 U.S.C. § 119 of U.S. Provisional Patent Application No. 63/511,915 filed July 5, 2023 and titled A *System and Method for Mapping Regional Social Entrepreneurship Ecosystems,* the content of which is incorporated herein.

### Field of the Invention

The embodiments disclosed herein relate to computer systems and methods for mapping of social entrepreneurship ecosystems in a region, including climate-smart social entrepreneurship. More specifically, the embodiments disclosed herein relates to systems and methods for gathering, aggregating, organizing and presenting, information of interest for social entrepreneurship.

### Background

The term "Social Entrepreneurship" (SE) captures a multitude of organizations that use business strategies and leverage market forces to create positive societal impact, either social or environmental, including pertaining to climate mitigation and adaptation. These may be companies of any size including small businesses, nonprofit or government entities, or intrapreneurs spearheading impactful efforts from within large companies or organizations. SE may be for-profit or non-profit and may operate in any legal form and in any sector of the economy.

For example, a small business selling fresh healthy food in a food desert, or employing disadvantaged individuals, or intentionally recycling its waste, or reducing its energy usage, or transitioning to renewable energy sources, are all examples of Social Entrepreneurship. Other examples include technology start-ups that aim to support climate mitigation and adaptation through their technologies, such as clean energy technologies, or nonprofit organizations that train individuals to become the installers of such technologies, or funding organizations that offer financing to help enable the utilization of those technologies.

SE can benefit from data and analytics related to their objectives, as well as from external resources as they pursue those objectives. With this information, SE can better evaluate how to allocate the resources at their disposal, so their resources can bring most value added, as well as from the understanding of various SE activities in their local ecosystem.

For example, a small business SE that grows and sells fresh healthy food in a food desert community can do its work more effectively if it has readily-accessible data about the location of food stores, the income and demographics of residents in different and about other organizations that focus on food access, just to name a few. By gathering, aggregating, organizing and displaying searchable information relevant to SE, organizations in the SE ecosystem can become more efficient and effective.

### SUMMARY

Accordingly, there is a need for methods of gathering, aggregating, organizing information of interest to SE and allowing users to dynamically interact with a map and other software to display or print information of particular interest or concern.

According to the embodiments disclosed herein describe a system for an interactive map of an SE ecosystem that gathers, aggregates, organizes and presents content of interest pertaining to SE.

**In** accordance with a first aspect, the invention provides a method of providing information for social entrepreneurship ecosystems within a geographic region, comprising: gathering social entrepreneurship data; aggregating the social entrepreneurship data into related groups; merging and storing the related groups into a related groups database; organizing the related groups of social entrepreneurship data into relevant categories; storing the relevant categories into a relevant groups database; and transmitting the relevant categories for display within a web browser on a user device.

Preferably, the social entrepreneurship data is gathered via at least one of a questionnaire, a form, or a selected third-party.

Preferably, the social entrepreneurship data is gathered via a computer-driven questionnaire.

Preferably, the computer-driven questionnaire is initiated responsive to receiving a user input via a web-enabled button.

Preferably, a second question comprised by the computer-driven questionnaire is generated responsive to a response to a first question comprised by the computer-driven questionnaire.

**Preferably,** the social entrepreneurship data is gathered via a selected third-party.

Preferably, the gathering of data via the selected third-party is initiated by a user selection of a web link.

Preferably, the social entrepreneurship data into related groups further comprises adding non-mappable data to the related groups database.

Preferably, the organization of the relevant groups database is based on a sustainability framework.

Preferably, transmitting the relevant categories for display comprises transmitting at least one of messages or scheduled meetings for display on the user device.

Preferably, transmitting the relevant categories for display comprises transmitting offers for at least one of sharing or selling at least one of products or services for display on the user device.

Preferably, the method further comprised generating one or more reports regarding the relevant categories via a generative artificial intelligence network.

Preferably, the region is one of a city, a state, a district, a province, a prefecture, a canton, a county, a borough, or other administrative district.

Preferably, the method further comprises displaying the relevant categories on a user device within a web browser.

In accordance with another aspect, the invention provides a computer system for gathering, aggregating, organizing and presenting information related to social entrepreneurship ecosystems in a region comprising: a data gathering software module configured to gather social entrepreneurship data; a related groups database on a non-transitory computer-readable storage medium; a group aggregation software module configured to: aggregate the social entrepreneurship data into related groups; and merge and store the related groups on the related groups database; a relevant groups database on the non-transitory computer-readable storage medium; an organization software module configured to: organize the related groups of social entrepreneurship data into relevant categories; and store the relevant categories on the relevant groups database; a display transmission software module configured to transmit the relevant categories for display within a web browser on a user device; a processor operable to execute each of the data gathering software module, the group aggregation software module, the organization software module, and the display transmission software module; and a communication device operable to transmit the relevant categories for display on the user device.

Preferably, the data gathering software module comprises software for a computer-driven questionnaire; wherein a second question comprised by the computer-driven questionnaire is generated responsive to a response to a first question comprised by the computer-driven questionnaire; and the data gathering software module comprises software for initiating the computer-driven questionnaire responsive to receiving a user input via a web-enabled button.

Preferably, the aggregating groups software module comprises software for adding non-mappable data to the related groups database.

Preferably, the presenting software comprises software for generating one or more reports regarding the relevant categories via a generative artificial intelligence network.

### DESCRIPTION OF THE FIGURES

Fig. 1 depicts a pictorial representation of a distributed processing computer system according to an embodiment of the invention.
Fig. 2 depicts a pictorial representation of a computer in the distributed processing computer system of Fig. 1.
Fig. 3 is a high-level flow chart for the of presentation of data or information relevant to social entrepreneurship ecosystems in a region according to an embodiment of the invention.
Fig. 4 depicts a web-enabled button in a web page according to an embodiment of the invention.
Fig. 5 depicts an example of a web-enabled questionnaire on a web page according to an embodiment of the invention.
Fig. 6 depicts the aggregation of data related to pollution into a Pollution & Compliance group according to an embodiment of the invention.
Fig. 7 depicts an example of a related groups framework according to an embodiment of the invention.
Fig. 8 depicts an example of a framework topic according to an embodiment of the invention.
Fig. 9 is an example of presenting relevant information for social entrepreneurship ecosystems according to an embodiment of the invention.
Fig. 10 depicts an illustrative example of software modules in computers within the distributed processing computer system of Fig. 1.

### DETAILED DESCRIPTION

Preferred embodiments of the embodiments disclosed herein are now described in detail. Referring to the drawings, like numbers indicate like parts throughout the views. As used in the description herein and throughout the claims that follow, the meaning of "a," "an," and "the" includes plural reference unless the context clearly dictates otherwise.

As will be appreciated by one skilled in the art, the disclosure may be embodied as a computer system, method or stored computer program. Accordingly, the disclosure may take the form of an entirely hardware embodiment, an entirely software embodiment or an embodiment combining software and hardware. The aspects of the disclosure are described below with reference to flowchart and/or block diagrams of methods or apparatus (computer systems) according to embodiments of the disclosure.

Systems and methods for mapping of social entrepreneurship ecosystems in a region may include the elements of gathering content, aggregating content, organizing content, and presenting content. Presenting content is also designated as displaying content. The system and method of SE ecosystem mapping involves deriving content that is (i) relevant for SE, and (ii) for stakeholders interested in supporting SE or benefitting from SE work (including, but not limited to, community groups, policy makers, funders, educators and researchers, together "SE stakeholders").

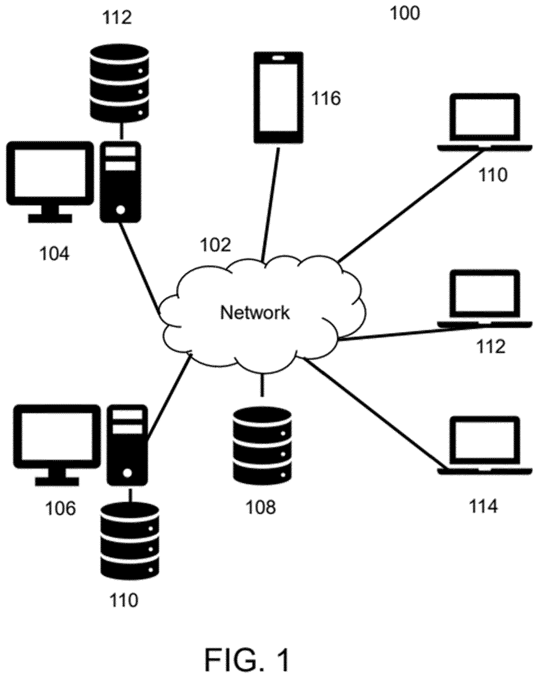

FIG. 1 is an illustrative diagram of a distributed processing computer system in which the illustrative embodiments may be implemented. It should be appreciated that FIG. 1 is only provided as an illustration of one implementation and is not intended to imply any limitation with regard to the environments in which different embodiments may be implemented. Distributed processing computer system 100 contains network 102 which provides communication links between various computer processing entities. Network 102 made by made up of other networks such as the Internet and may include wired or wireless links, or fiber optic links. Depicted in FIG 1 are a number of server computers 104, 106, which are connected over network 102 to various client computers 110, 112, 114 and 116. These client computers can be cell phones, smartphones, personal digital assistants (PDAs), tablet computers or personal computers. Also shown in distributed processing computer system 100 is data storage 108, 110, 112 which can be connected directly to network 102 (108) or attached to servers 104 (112) and 106 (110).

By way of example, the computers and storage of distributed processing computer system 100 can be connected over the Internet with network 102 representing a worldwide collection of networks and gateways that use the Transmission Control Protocol running over Internet Protocol (TCP/IP) to communicate with one another. Distributed processing computer system 100 also may be implemented as a number of different types of networks, such as for example, an intranet, a local area network (LAN), or a wide area network (WAN). FIG. 1 is intended as an example, and not as an architectural limitation for the different explanatory embodiments.

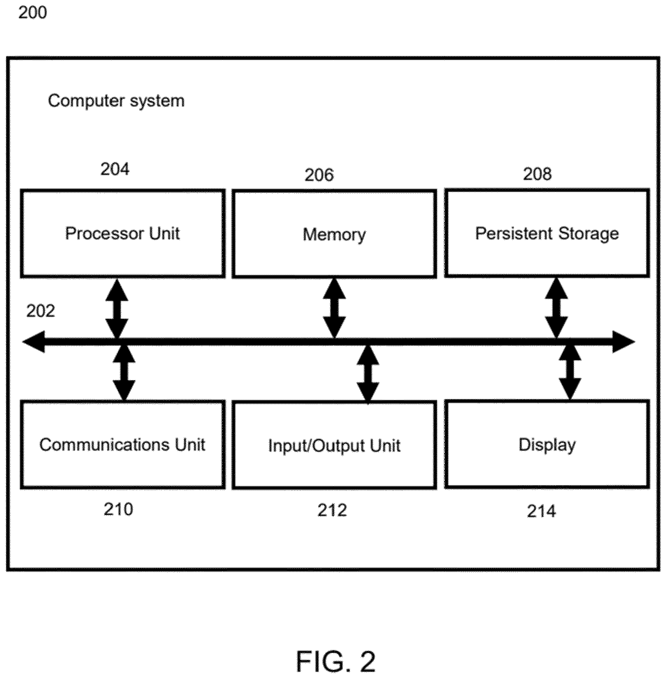

**FIG** 2 is a block diagram of a computer system 200 which may be a server 104, 106 or client computer 110, 112, 114 or 116 or even networked storage 108 as shown in the system 100 of FIG. 1. In this example, computer system 200 includes communications fabric/bus 202, which provides communications between processor unit 204, memory 206, a non-transitory persistent storage medium 208, communications unit 210, input/output (I/O) unit 212, and display 214. The persistent storage medium 208 can be housed within computer system 200 or attached via communication unit 210.

Processor unit 204 may be operable to execute instructions for software that may be loaded into memory 206. Processor unit 204 may be one or more processors, a multi-processor core, or some other type of processor, field-programmable gate array, or any other device operable to digitally execute software instructions, depending on the particular implementation. Memory 206 and persistent storage medium 208 are examples of storage devices 216. A storage device is any piece of hardware that is capable of storing information, such as, for example, without limitation, data, program code in functional form, and/or other suitable information on either a temporary basis and/or a permanent basis. Memory 206, in these examples, may be, for example, a random access memory or any other suitable volatile or non-volatile storage device. Persistent storage medium 208 may take various forms, depending on the particular implementation, but may be non-volatile, such as hard disk drives, solid-state drives, flash memory, and the like.

Communications unit 210, in these examples, provides for communications with other data processing computer systems or computers. In these examples, communications unit 210 is a network interface card. Communications unit 210 may provide communications through the use of either or both physical and wireless communications links. Communications unit 210 may be operable to communicate with computerized devices directly and/or across a network, such as network 102 of FIG. 1.

Input/output unit 212 allows for input and output of data with other devices that may be connected to data processing computer system 200. For example, input/output unit 212 may provide a connection for user input through a keyboard, a mouse, and/or some other suitable input device. Further, input/output unit 212 may send output to a printer. Display 214 provides a mechanism to display information to a user such as a computer monitor or a smartphone screen.

Software instructions for the operating system, applications, and/or programs may be located in persistent storage medium 208 or memory 206, which are in communication with processor unit 204 through communications fabric 202. These instructions may be loaded into memory 206 for execution by processor unit 204.

Software and data stored in storage devices is available to processor 204 via communications fabric 202. The software stored in storage devices and executed by the processor 204 may be organized and structured into software modules. The data in storage devices may also be organized and structured into databases by software modules executing on processor 204. Examples of well-known databases include structured query language (SQL), MongoDB, Oracle Database and IBM Db2.

In this example, client devices 110, 112, 114 and 116 act as clients to server computers 104, 106. Server computers 104, 106 act as servers in that they provide information, such as mapping information or web-based applications to client computers 110, 112, 114 and 116. The information provided by these servers can take the form of data or information that is (i) relevant for SE, and (ii) for stakeholders interested in supporting SE or benefitting from SE work (including, but not limited to, community groups, policy makers, funders, educators and researchers, together "SE stakeholders").

### Gathering of Data

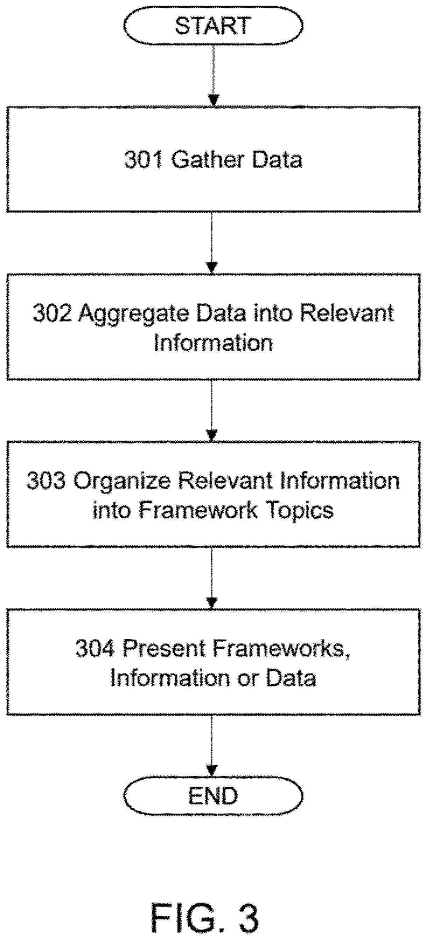

Fig. 3 shows a high-level flow chart for the presentation of data or information relevant to social entrepreneurship ecosystems in a region. The first step is the gathering of data relevant to SE as shown in step 301. This data can be facts, figures, statistics, among others, gathered from various sources including both primary and secondary sources. This data can be gathered using a variety of strategies and or incentives. Non-mappable data may also be collected from public data sources to be used in the generation of reports. One of ordinary skill will understand that generative artificial intelligence could be used in the generation of these reports.

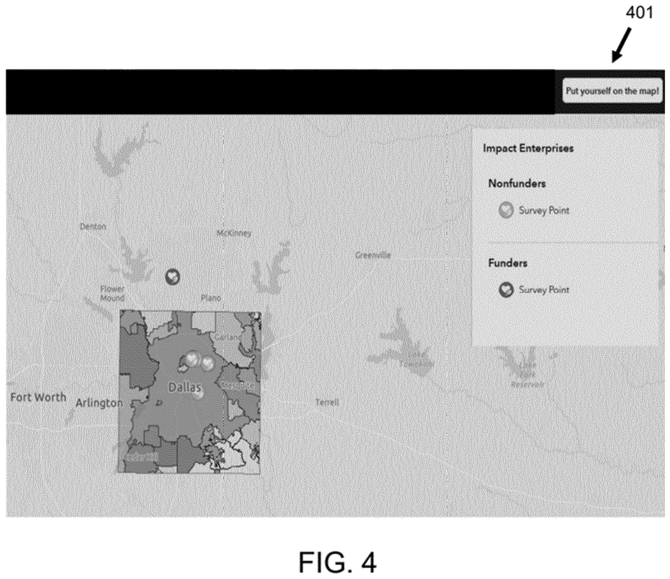

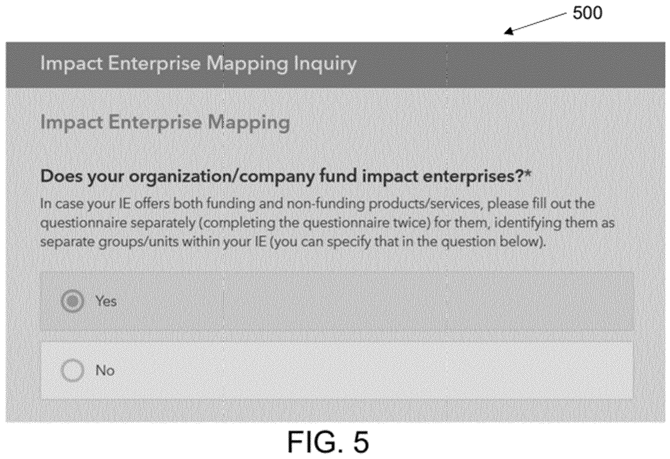

One way data can be gathered is from a computer driven questionnaire. For example, when a web server delivers the web page for the system, there may be displayed a button titled "Put Yourself on the Map," in the upper right-hand corner, as shown as button 401 in Fig. 4. When this button is pressed, the user may be asked one or more preliminary questions to determine one or more characteristics, an exemplary question 500 of which is shown in Fig. 5. For example, the software associated with this button may query the user as to whether they consider themselves a "Funder" or a "Non-Funder". All questions that may be presented to a user to acquire data as described herein is contemplated and included within the scope of the invention.

Depending on the answer to these questions the computer will generate tailored questions relating to their work in this space. Answers received from the user may be used to progressively generate subsequent queries to be presented to the user in the gathering of data. The computer system then gathers the relevant information and places it into an internal database.

In some embodiments, a web link can also or alternatively be provided directly to partners or other select groups so that their data could be gathered directly.

Incentives may be offered as part of the data gathering. For example, those that share the requested information may get access to information in the SE ecosystem map that otherwise may not be publicly accessible for them ("incentive information"). This may be educational, research or policy information, among others. The scope of the incentive information will depend on the answers to the computerized questionnaire. Furthermore, those that share information may be considered for special programs, such as awards or funding, in which cases the answers to the computerized questionnaire will serve as at least partial basis for determining the eligibility for and the recipients of those programs.

**In** some embodiments, the computerized questionnaire may include questions related to the climate mitigation and adaptation activities of the social enterprises answering the questions. For example, a social enterprise may fill out the computerized questionnaire and answers questions about its activities, what exact geographies it carries out those activities in, what kind of climate mitigation and adaptation benefits those activities have, and what funding needs it has, among others. An organization that funds social enterprises may fill out the computerized questionnaire and answers questions about its funding activities, what exact geographies it offers those funding activities in, and what kind of social enterprises it funds, and what kind of climate mitigation and adaptation activities it funds, among others.

### Aggregation of Data into Related Groups

After the relevant data is gathered, this data is aggregated into related groups by computer software, as shown in step 309. In step 302 of Fig. 3, the data gathered in step 301 is aggregated along with other forms of SE-relevant public data. This other forms of SE-relevant public data may include statistics, figures, facts, among others, gathered from various reputable sources either from the entity collecting the data or government and non-governmental organizations (e.g., the City of Dallas, Center for Disease Control, Houston Advanced Research Center, etc.).

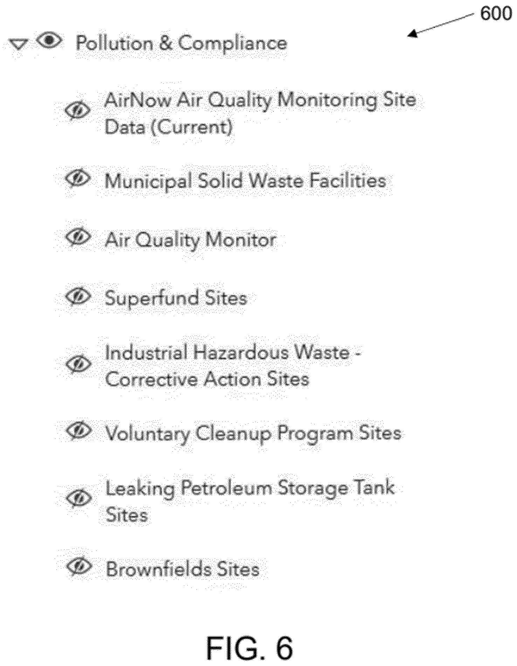

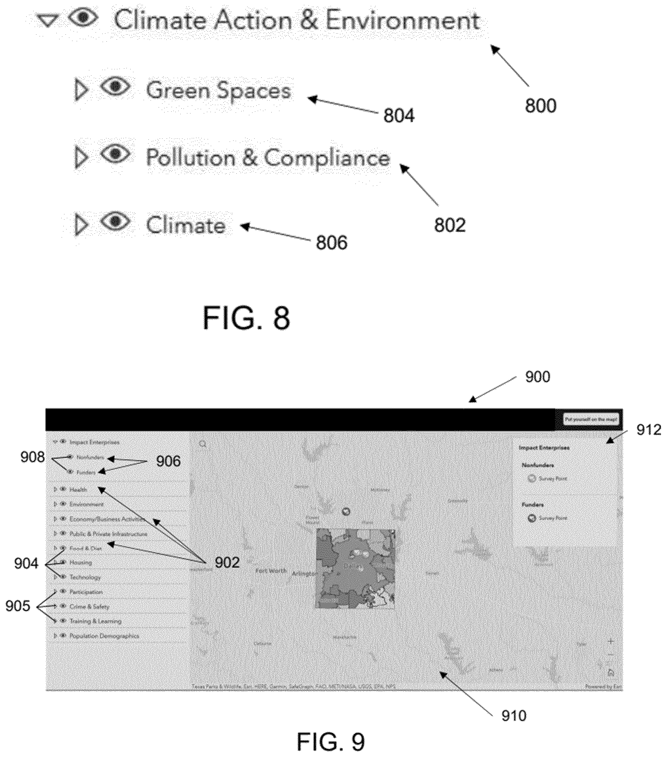

By way of example and not limiting the scope of the invention, the aggregated information pertaining to a sub-category of a related group, e.g. "Pollution & Compliance" as shown in Fig. 6 and discussed in greater detail herein below, is comprised of data gathered from AirNow, Texas Commission on Environmental Quality, TCEQ, and Federal Emergency Management Agency, FEMA, organized under the framework category "Climate Action & Environment" (as shown in Fig. 8) and displayed to the user by the system.

This aggregated data is then merged into related groups by merging the data of a particular related group in a particular data set. These data sets can then be stored in a database. It is contemplated and included within the scope of the invention that public data from any source may be utilized in this manner. Moreover, the subcategories of the related group 600 are exemplary only and all groupings and subcategories of information are contemplated an included within the scope of the invention.

### Organizing Relevant Information into Framework Topics

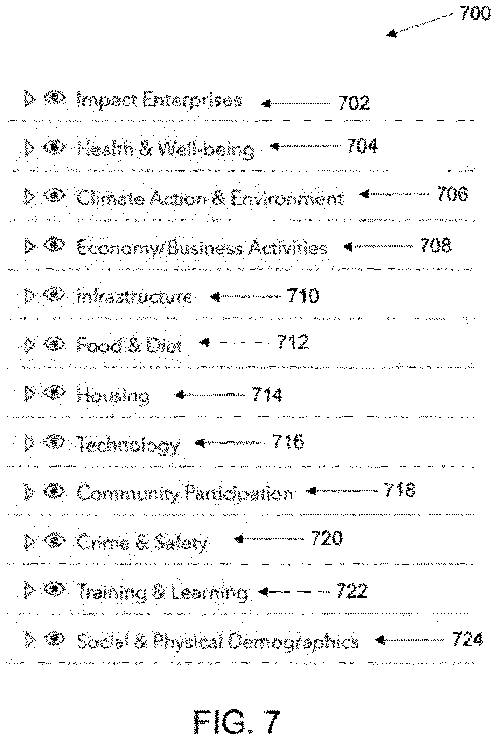

Step 303 of Fig. 3 takes place after the relevant information has been aggregated into related groups. This step is the organization of the related groups into framework topics according to a framework that is relevant to SE. For example, the related groups could be organized into framework topics that are based on established sustainability frameworks (e.g., U.N. Sustainability Goals, OECD Well-being Index, etc.) which are well known to SE. An example of a framework relevant to SE is shown in a framework 700 in Fig. 7. The exemplary framework 700 has related groups of Impact Enterprises 702, Health & Well-being 704, Climate Action & Environment 706, Economy/Business Activities 708, Infrastructure 710, Food & Diet 712, Housing 714, Technology 716, Community Participation 718, Crime & Safety 720, Training & Learning 722, and Social & Physical Demographics 724. The related groups of framework 700 is exemplary only and non-limiting, and any other set of related groups is contemplated and included within the scope of the invention.

Computer software is used to place relevant aggregated groups of information under the appropriate framework category. For example, the Pollution & Compliance 802 related group is organized under the framework topic 800 "Climate Action & Environment" as shown in Fig. 8. The related groups "Green Spaces" 804, "Pollution & Compliance" 802 and "Climate" 806 are organized by the distributed processing computer system into the framework topic "Climate Action & Environment" 800.

**Intentionally** aggregating SE relevant information and organizing and it based on SE relevant frameworks in and of itself is expected to foster effective and efficient SE projects with maximum impact. For example, for an SE that aims to alleviate poverty through educational programs, information about geographic areas where low-income households are concentrated under "social demographics" category, can be beneficial to help better target their efforts. Information about the percentage of household income spent on electricity in target community can raise awareness about the need for energy conservation education.

### Presentation of Information.

The next step is the presentation of information, both mappable and not mappable, contextualized for different SE areas, either by a display device or by generated reports. The information can be displayed in a browser where the framework categories can be displayed. Other display devices such as cell phones, smartphones, PDAs, and tablet computers such as iPads, can also be used to display the information. The computer software can take into account the type of display by reading the "user agent" information sent to it by the display device. In addition, non-mappable data can be applied in computer generated reports targeted to specific requirements of the SE. By way of example, for SE that aims to alleviate poverty through educational programs, information about the work of similar organizations in other geographies, or new research that pertains to the effectiveness of educational approaches in low-income communities. The presented contextualized information can foster new SE efforts. For example presenting evidence about the positive impact of energy efficiency measures on the wellbeing and livelihoods of low income families, through savings in their electricity bills, can foster users that work on poverty or education or community development efforts users to offer SE initiatives that foster energy efficiency. Fig. 9 shows an example depiction 900 of presenting relevant information for social entrepreneurship ecosystems in a region, in this case Dallas, Texas. A Dallas Enterprise Ecosystem system is hosted on a distributed processing computer system as presented in FIG. 1 above and provides a searchable map and database of the SE ecosystems via display devices such as smart phones or web browsers to users. Each of the related groups 902 shown in the depiction 900 may have a display toggle 904 (here represented as an eye) which a user may toggle to selectively display or not display the sub-groups on a map 910 or other visual representation comprised by the depiction 900 comprised by the related group 902. Each related group 902 may also have an associated drop-down toggle 905 which may cause the display or non-display of sub-groups 906 comprised by the related group 902. Similarly, each sub-group 906 that may be comprised by a related group 902 may have a display toggle 908 which a user may toggle to selectively display the subgroups 906 on the map 910 of the display 900. The display 900 may further comprise a legend 912 which may provide information regarding the related groups 902 and/or sub-groups 906 that are presently displayed on the map 910.

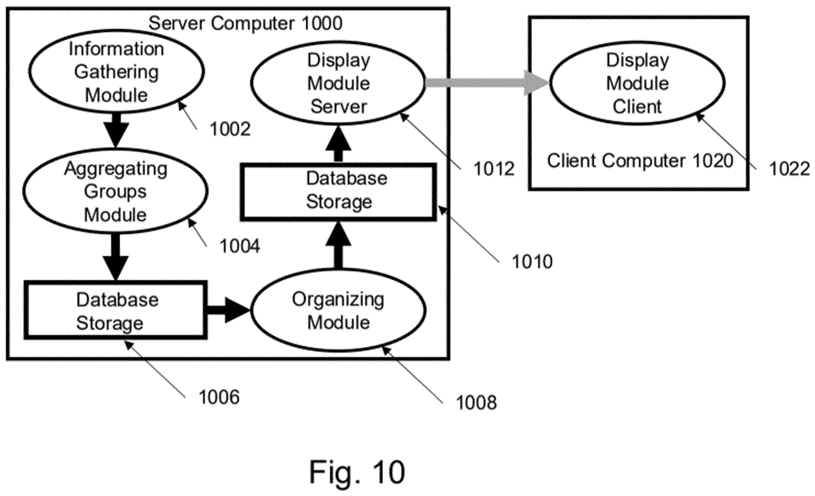

Referring now to Fig. 10, an illustrative example of software modules in computers within the distributed processing computer system for presenting the information shown in Fig. 9 is presented. Though depicted as running on either client or sever computers, this in no way limits this invention to this one particular embodiment as one of skill would understand there are a number of ways software functionality can be distributed in a distributed processing computer system.

**An** information gathering software module 1002 on a server computer 1000, which may be similar to a server computer 104 of FIG. 1, first gathers information from various sources such as targeted surveys or third-party systems. Next, an aggregating groups software module on server computer 104 takes information from the information gathering software module and merges it into related groups based on some criterion. After merging the gathered information into related groups, an aggregating groups software module 1004 on server computer 104 writes the related groups into database storage 1006, for example in an SQL database. An organizing software module 1008 reads data from the related groups database and reorganizes it into relevant groups. The relevant groups data can then be stored in database storage 1010. Display software can then be utilized to display various aspects of these two databases on a user device. In this illustrative embodiment, the Display Module is split between a display module server 1012 on the server computer 1000 and a display module client 1022 on a client computer 1022, the client computer 1022 being a computer like client computers 110, 112, 114 and 116 of Fig. 1. It is contemplated and included within the scope of the invention the display module may be located solely on one of the server computer 1000 and the client computer 1100. On client computer 1022, mapping information is then displayed to the SE via an output device such as a computer display screen.

The distributed processing computer system for presenting relevant information for social entrepreneurship ecosystems is made extremely flexible by the use and reuse of software modules shown inf Fig. 10. This allows for easy the addition of functionality to the system. For example, functionality such as functionality for sending messages, scheduling meetings, offering, sharing or selling products/services could be easily added by of one of ordinary skill and would increase the exchange of information in the SE ecosystem and promote even greater efficiencies. This increased functionality could be delivered in a number of different ways such as via smart contracts, leveraging web3 and or Distributed Autonomous Organizations (DAO) technology. Blockchain based rating of products and services could further enhance the system by providing a tamper proof record of the gathered data. A user-friendly interface would allow others, such as local governments to generate analytical reports based on certain attributes such as local service availability. Generative artificial intelligence could be used in the generation of these analytical reports.

These additional steps leverage all the data and information in the SE ecosystem map system to curate relevant information for each user to foster SE solutions, to make relevant connections in order to foster impactful collaborations and to facilitate all forms of access (such as access to customers, access to markets, access to financing, among others). For example an organization working in SE education that starts an energy efficiency education program in a low income community can connect with other organizations in different geographies doing similar work, can identify funders who might finance such efforts and apply to financing through the SE ecosystem map, and connect with companies that sell and install energy efficiency technologies and solutions and compare their prices and offerings.

The description of the disclosure has been presented for purposes of illustration and is not intended to be exhaustive or limited to the disclosure in the form disclosed. Many modifications and variations will be apparent to those of ordinary skill in the art. The embodiment was chosen and described in order to best explain the principles of the disclosure, the practical application, and to enable others of ordinary skill in the art to understand the disclosure for various embodiments.

## Claims

1. A method of providing information for social entrepreneurship
ecosystems within a geographic region, comprising:
gathering social entrepreneurship data;
aggregating the social entrepreneurship data into related groups;
merging and storing the related groups into a related groups database;
organizing the related groups of social entrepreneurship data into relevant categories;
storing the relevant categories into a relevant groups database; and
transmitting the relevant categories for display within a web browser on a user device.

2. The method of claim 1 wherein the social entrepreneurship data is gathered via at least one of a questionnaire, a form, or a selected third-party.

3. The method of claim 2 wherein:
the social entrepreneurship data is gathered via a computer-driven questionnaire; and
the computer-driven questionnaire is initiated responsive to receiving a user input via a web-enabled button.

4. The method of claim 3 wherein a second question comprised by the computer-driven questionnaire is generated responsive to a response to a first question comprised by the computer-driven questionnaire.

5. The method of claim 2 wherein:
the social entrepreneurship data is gathered via a selected third-party; and
the gathering of data via the selected third-party is initiated by a user selection of a web link.

6. The method of claim 1 wherein aggregating the social entrepreneurship data into related groups further comprises adding non-mappable data to the related groups database.

7. The method of claim 1 where the organization of the relevant groups database is based on a sustainability framework.

8. The method of claim 1 wherein transmitting the relevant categories for display comprises transmitting at least one of messages or scheduled meetings for display on the user device.

9. The method of claim 1 where transmitting the relevant categories for display comprises transmitting offers for at least one of sharing or selling at least one of products or services for display on the user device.

10. The method of claim 1 further comprising generating one or more reports regarding the relevant categories via a generative artificial intelligence network.

11. The method of claim 1 wherein the region is one of a city, a state, a district, a province, a prefecture, a canton, a county, a borough, or other administrative district.

12. A computer system for gathering, aggregating, organizing and presenting information related to social entrepreneurship ecosystems in a region comprising:
a data gathering software module configured to gather social entrepreneurship data;
a related groups database on a non-transitory computer-readable storage medium;
a group aggregation software module configured to:
aggregate the social entrepreneurship data into related groups; and
merge and store the related groups on the related groups database;
a relevant groups database on the non-transitory computer-readable storage medium;
an organization software module configured to:
organize the related groups of social entrepreneurship data into relevant categories; and
store the relevant categories on the relevant groups database;
a display transmission software module configured to transmit the relevant categories for display within a web browser on a user device;
a processor operable to execute each of the data gathering software module, the group aggregation software module, the organization software module, and the display transmission software module; and
a communication device operable to transmit the relevant categories for display on the user device.

13. The system of claim 12 wherein: the data gathering software module comprises software for a computer-driven questionnaire; wherein a second question comprised by the computer-driven questionnaire is generated responsive to a response to a first question comprised by the computer-driven questionnaire; and the data gathering software module comprises software for initiating the computer-driven questionnaire responsive to receiving a user input via a web-enabled button.

14. The system of claim 12 wherein the aggregating groups software module comprises software for adding non-mappable data to the related groups database.

15. The system of claim 12 wherein the presenting software comprises software for generating one or more reports regarding the relevant categories via a generative artificial intelligence network.
